# EUROPÄISCHE PATENTANMELDUNG

(11) **EP 1 967 313 A1**
(43) Veröffentlichungstag der Anmeldung: **10.09.2008**
(21) Anmeldenummer: 07004959.8
(22) Anmeldetag: 09.03.2007
(51) Int. Cl.: B23K 1/00, B23K 35/02, B23P 6/04

(54) **Bauteil und ein Lot**

(71) Anmelder: SIEMENS AKTIENGESELLSCHAFT, 80333 München (DE); MTU Aero Engines GmbH, 80995 München (DE)
(72) Erfinder: Manier, Karl-Heinz, 85298 Scheyern (DE); Ott, Michael, Dr., 45470 Mülheim an der Ruhr (DE)

(57) **Zusammenfassung**

In einem erfindungsgemäßen Reparaturverfahren zum Reparieren von einem Basismaterial mit einer gerichteten Mikrostruktur umfassenden Bauteilen (1) erfolgt die Reparatur derart, dass ein Lot (7) verwendet wird, das Bestandteile mit unterschiedlichen Korngrößenverteilungen aufweist.

## Beschreibung

Die vorliegende Erfindung betrifft ein Bauteil und ein Lot.

Bauteile von Turbinen sind heutzutage nicht selten aus Materialien mit einer gerichteten Mikrostruktur hergestellt. Als Materialien mit einer gerichteten Mikrostruktur sollen hierbei insbesondere einkristalline Materialien und Materialien, die eine Kornstruktur aufweisen, wobei die Ausdehnung der Körner eine gemeinsame Vorzugsrichtung aufweist, anzusehen sein. So können die Körner in einer bestimmten Vorzugsrichtung eine größere Abmessung aufweisen als in den übrigen Richtungen. Bauteile mit einer derartigen Kornstruktur werden auch als direktional erstarrte Bauteile (directional solidified) bezeichnet.

Stark belastete Bauteile, wie etwa Turbinenschaufeln, unterliegen während des Betriebs einer hohen thermischen und mechanischen Beanspruchung, die zu Materialermüdungen und infolgedessen zu Rissen führen kann. Da das Herstellen von Bauteilen aus Basismaterialien, welche eine gerichtete Mikrostruktur aufweisen, relativ kostspielig ist, ist man in der Regel bemüht, derartige Bauteile nach Eintritt von Schädigungen zu reparieren. Damit wird die Funktionstüchtigkeit wieder hergestellt und das Bauteil für eine weitere Revisionsperiode einsetzbar.

Eine Möglichkeit der Reparatur beschädigter Bauteile ist beispielsweise das Löten. Bei diesem Löten wird ein Lot im Bereich der Beschädigung auf das Material des Bauteils, also auf das Basismaterial, aufgebracht und mittels Wärmeeinwirkung mit dem Basismaterial verbunden. Nach dem Löten weist das Lotmaterial jedoch bei der bisher üblichen Verfahrensweise keine einkristalline oder direktional erstarrte Struktur auf. Eine ungeordnete Struktur besitzt jedoch im Vergleich zu einer gerichteten Mikrostruktur schlechtere Materialeigenschaften - vor allem im Hochtemperaturbereich -, sodass die Lötstelle schlechtere Materialeigenschaften als das umgebende Basismaterial aufweist.

Zum Reparieren von beschädigten Bauteilen mit einer gerichteten Mikrostruktur stehen Schweißverfahren zur Verfügung, mit denen auch gerichtete Mikrostrukturen in den verschweißten Strukturen erzeugt werden können. Ein derartiges Verfahren ist beispielsweise in EP 089 090 A1 offenbart.

Weitere Verfahren bzw. verwendete Lotpulver sind bekannt aus den Publikationen US 6,283,356, US 4,705,203, US 4,900,394, US 6,565,678, US 4,830,934, US 4,878,953, US 5,666,643, US 6,454,885, US 6,503,349, US 5,523,170, US 4,878,953, US 4,987,736, US 5,806,751, US 5,783,318, US 5,873,703.

Die US-PS 6,050,477 offenbart ein Verfahren zum Verbinden zweier Bauteilelemente, wobei das Lot großflächig zwischen den beiden Bauteilkomponenten aufgebracht wird und ein Temperaturgradient benutzt wird, um dieselbe gerichtete Mikrostruktur zu erzeugen. Das gesamte Bauteil wird erwärmt.

Die US 2003/0075587 A1 offenbart ein Reparaturverfahren eines Bauteils mit einer gerichtet erstarrten Mikrostruktur, wobei jedoch die reparierte Stelle nicht dieselbe Mikrostruktur wie das zu reparierende Bauteil aufweist.

Die US-PS 6,495,793 offenbart ein Schweißreparaturverfahren für nickelbasierte Superlegierungen, bei dem ein Laser verwendet wird, wobei der Laser das Material, das über einen Materialförderer zugeführt wird, aufschmilzt. Außerdem wird beim Schweißprozess das Basismaterial aufgeschmolzen. Eine Aussage über die Mikrostruktur des Bauteils oder der Reparaturstelle wird nicht getroffen.

Die EP 1 258 545 A1 offenbart ein Lötverfahren ohne Temperaturgradienten.

Die EP 1 340 567 A1 offenbart ein Schweißverfahren, bei dem zusätzliches Material zu der bereits aufgeschmolzenen zu reparierenden Stelle zugefügt wird. Ebenso wird hier das Basismaterial aufgeschmolzen. Es wird ebenfalls ein Temperaturgradient verwendet, um die Bauteile mit gerichteter Mikrostruktur zu behandeln.

Die US-PS 4,878,953 offenbart ein Schweißverfahren zur Reparatur eines Bauteils mit gerichteter Mikrostruktur, bei dem Material auf die reparierende Stelle mittels Pulver aufgetragen wird und diese Stelle eine feinkörnige Mikrostruktur aufweist. Ebenso wird hier das Basismaterial aufgeschmolzen.

Schweißverfahren schmelzen jedoch immer das Basismaterial des zu reparierenden Bauteils auf. Strukturell tragende Bereiche eines Bauteils dürfen daher nicht geschweißt werden, da aufgrund des Aufschmelzens des Basismaterials die Integrität der gerichteten Struktur verloren ginge. Deshalb werden Bauteile mit einer gerichteten Mikrostruktur nur dann mittels der Schweißverfahren repariert, wenn sich die Beschädigungen nicht in strukturell tragenden Bereichen des Bauteils befinden. Befindet sich dagegen eine Beschädigung in einem strukturell tragenden Bereich des Bauteils, so wird, falls eine gerichtete Schweißstruktur verlangt wird, dieses Bauteil als nicht reparierbar deklariert und gegen ein intaktes Bauteil ausgetauscht.

Aufgabe der Erfindung ist es, ein Lot bzw. ein Bauteil aufzuzeigen, die verbesserte Eigenschaften aufweisen.

Die Aufgabe wird gelöst durch ein Bauteil nach Anspruch 1 und ein Lot nach Anspruch 8.

Die abhängigen Ansprüche enthalten vorteilhafte Ausgestaltungen der vorliegenden Erfindung, die in vorteilhafter Art und Weise beliebig miteinander kombiniert werden können.

Ausführungsbeispiele werden in den Figuren näher erläutert. Es zeigen:
- Figur 1: ein erfindungsgemäßes Lot,
- Figur 2: eine Korngrößenverteilung eines erfindungsgemäßen Lots,
- Figur 3, 4, 5: ein Ausführungsbeispiel für ein Verfahren zum Aufbringen des Lots,
- Figur 6: eine Gasturbine,
- Figur 7: perspektivisch eine Brennkammer,
- Figur 8: perspektivisch eine Turbinenschaufel.

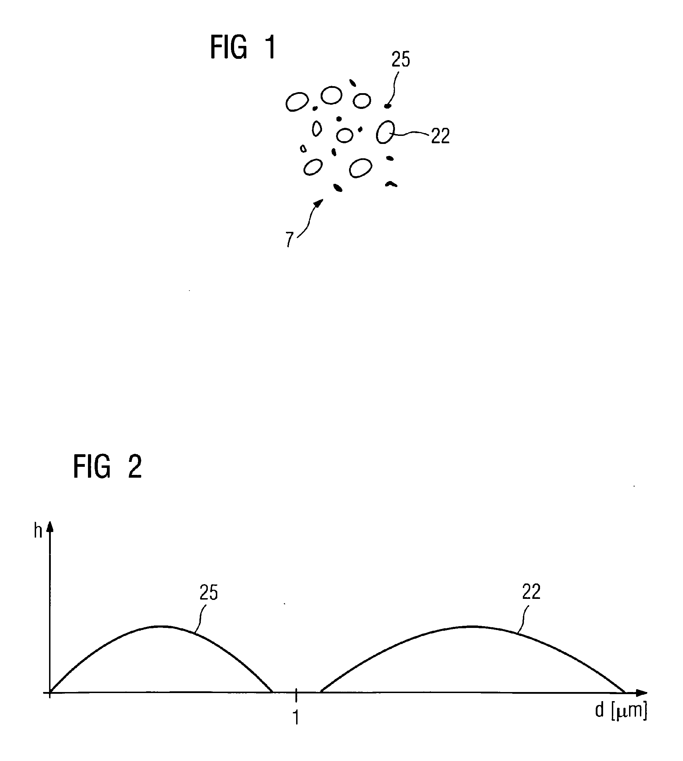

Figur 1 zeigt Pulverteilchen eines erfindungsgemäßen Lots 7.

Das Lot 7 stellt eine Mischung aus zwei metallischen Pulverbestandteilen 22, 25 dar, weist also einen ersten Pulverbestandteil 22 aus gröberen Teilchen 22 mit Korngrößen im Submikro- oder Mikrometerbereich (0,7µm - 100µm, insbesondere ≥ 0.7µm bis 75µm oder besonders vorzugsweise ≥ 25µm und ≤ 75µm) sowie ein Pulverbestandteil 25 auf, dessen Korngrößen im Nanometerbereich liegen (Fig. 2), das Korngrößen kleiner 500 Nanometer aufweist. Die Kurven der Korngrößenverteilungen der Pulverbestandteile 22, 25 (Fig. 2) können sich auch teilweise überlappen. Jedoch sind immer zwei voneinander beabstandete Maxima in den beiden Korngrößenverteilungen der Pulverbestandteile des Lots 7 (Fig. 2) zu erkennen.

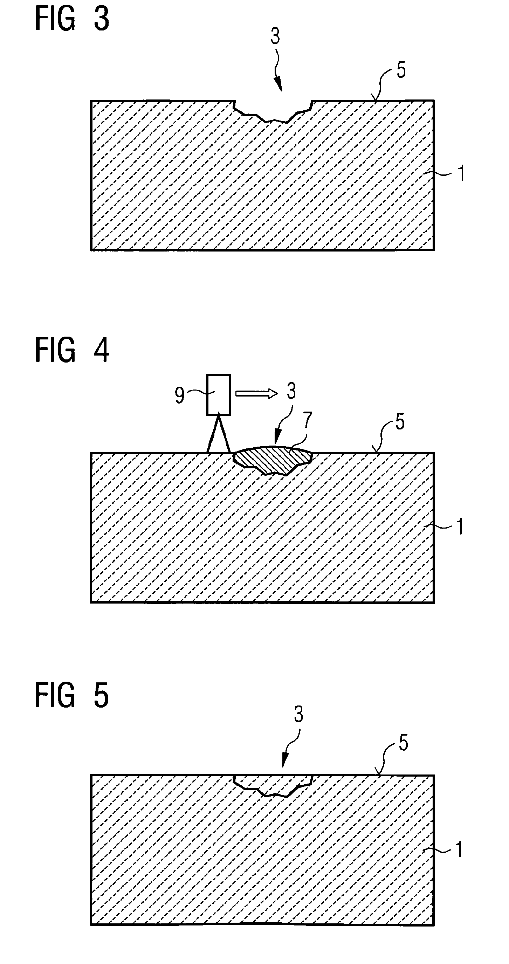

Der erste Bestandteil 22 und der zweite Bestandteil 25 bestehen vorzugsweise aus verschiedenen Materialien.
Der zweite Bestandteil 25 entspricht vorzugsweise dem Material des Basismaterials eines zu reparierenden Bauteils 1, 120, 130, 155 (Fig. 3, 6, 7, 8), das vorzugsweise nickelbasiert ist.

Der erste Bestandteil 22 weist vorzugsweise eine Schmelztemperatur unterhalb des zweiten Bestandteils 25 auf, da der zweite Bestandteil 25 dem Basismaterial des Bauteils 1 ähnelt oder entspricht. Da der zweite Bestandteil 25 dem Basismaterial des Bauteils 1 ähnelt oder entspricht, ist die Schmelztemperatur des zweiten Bestandteils 25 gegenüber dem des Basismaterials durch den Korngrößeneffekt verringert, da der zweite Bestandteil 25 die kleineren Teilchen 25 im Nanometerbereich aufweist.
Die Schmelztemperatur des Basismaterials des Bauteils 1, 120, 130, 155 ist die eines Massivmaterials, ist also nicht beeinflusst durch den Korngrößeneffekt. Durch den Korngrößeneffekt der Schmelztemperatur werden die Schmelztemperaturen der zwei Bestandteile 22, 25 des Lots 7 angepasst, d.h. die Schmelztemperatur des höher schmelzenden Bestandteils wird durch den Korngrößeneffekt an die niedrigere Schmelztemperatur des ersten Bestandteils 22 angepasst, also erniedrigt. Ebenso vorzugsweise kann der Schmelzpunkt des ersten Bestandteils 22 eine höhere Schmelztemperatur aufweisen als der zweite Bestandteil 25.
Die Schmelztemperaturen der Bestandteile 22, 25 des Lots 7 liegen aber immer unter dem Schmelzpunkt des Basismaterials eines zu reparierenden Bauteils 1.

Vorzugsweise stellt der erste Bestandteil 22 eine Legierung dar, die vorzugsweise nickelbasiert ist.
Ebenso vorzugsweise stellt der zweite Bestandteil 25 eine Legierung dar, die vorzugsweise nickelbasiert ist.

Der zweite Bestandteil 25 kann dem Material des Substrats entsprechen oder ähneln.

Ähnliche Zusammensetzung bedeutet, dass die Bestandteile 22, 25 zumindest die Hauptlegierungselemente (Elemente mit Legierungsanteil ≥ 1wt%) einer Legierungszusammensetzung (Basismaterial) aufweisen, vorzugsweise zumindest alle Legierungselemente der Legierung des Basismaterials, deren Anteile allerdings für diesen Bestandteil des Lots verändert sind, plus Zusätze (Schmelzpunkterniedriger), aufweisen.
Der Begriff "... entspricht dem Basismaterial" bedeutet identische Zusammensetzung mit dem Basismaterial.

Der erste Bestandteil 22 kann vorzugsweise ohne einen Schmelzpunkterniedriger einen niedrigeren Schmelzpunkt aufweisen, weil seine 22 Zusammensetzung vom Basismaterial des Bauteils 1, 120, 130, 155 abweicht.
Vorzugsweise weist der erste Bestandteil 22 zumindest einen Schmelzpunkterniedriger, insbesondere einen, insbesondere Bor (B), Silizium (Si), Kohlenstoff (C), Hafnium (Hf), Titan (Ti), Tantal (Ta) oder Zirkon (Zr) auf.
Dabei kann dieselbe Legierung wie beim Basismaterial des Bauteils verwendet werden: Erster Bestandteil 22 = Basismaterial des Bauteils 1 + Schmelzpunkterniedriger.
Wenn ein Substrat eines Bauteils 1, 120, 130, 155 repariert wird, gibt es folgende Möglichkeiten für das Lot 7, dessen Zusammensetzung vom Basismaterial verschieden (‡ Substrat) ist.

| Bestandteil | 22 [µm] | 25 [nm] |
|---|---|---|
| Zusammensetzung | ‡ Substrat | ‡ Substrat |
| Bestandteil | ‡ Substrat | = Substrat |

In Figur 3 ist in schematischer Ansicht ein beschädigtes Bauteil 1 dargestellt, das mit dem erfindungsgemäßen Lot 7 repariert wird.

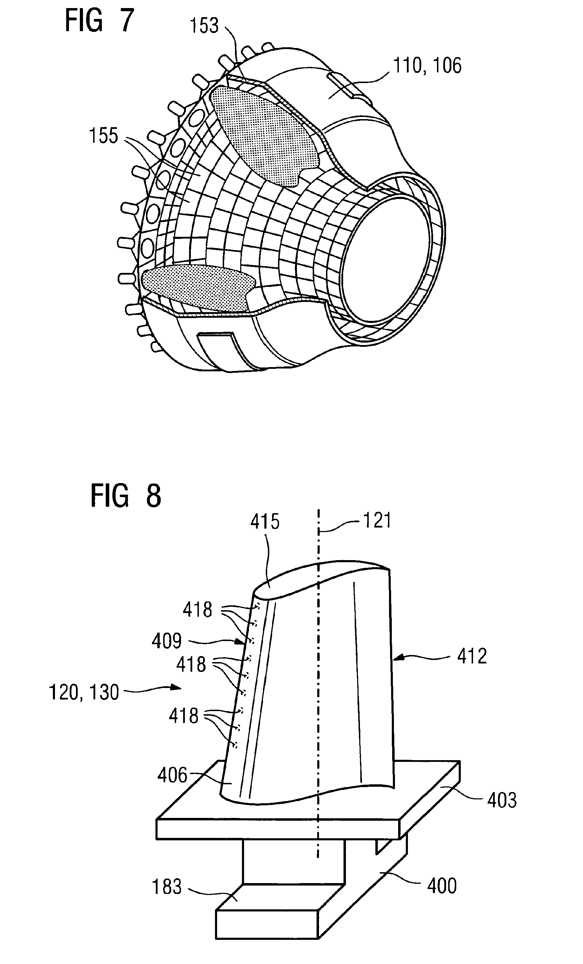

Das Basismaterial des Bauteils 1, beispielsweise eine Turbinenschaufel 120, 130 (Fig. 7), umfasst eine Legierung vorzugsweise auf Nickelbasis und weist vorzugsweise eine gerichtete Mikrostruktur, die in den Figuren durch kurze diagonal verlaufende Striche angedeutet ist, auf.
Die Beschädigung 3 des Bauteils 1 befindet sich im Bereich der Oberfläche 5 und ist in der Figur 3 als Vertiefung dargestellt.

Zum Reparieren des geschädigten Bauteils 1 wird ein Lot 7, das im vorliegenden Ausführungsbeispiel in Pulverform vorliegt, auf die vorgereinigte beschädigte Stelle 3 aufgebracht und anschließend mittels Wärmeeinwirkung mit dem Basismaterial des Bauteils 1 verlötet (Fig. 4).
Vorzugsweise wird das gesamte benötigte Lot 7 in die vorzugsweise vorgereinigte beschädigte Stelle 3 ggf. mit einem kleinen Überschuss eingebracht und insbesondere nicht während des Aufschmelzens schrittweise hinzugeführt.
Vorzugsweise wird das Lot 7 in die beschädigte Stelle 3 hineingedrückt. Das hat den Vorteil, dass die gesamte beschädigte Stelle 3 mit dem Lot 7 ausgefüllt wird. Insbesondere bei Rissen 3, die in die Tiefe gehen (hohes Aspekt-Verhältnis) und eine ungleichförmige Querschnittsfläche haben, würde nach dem Stand der Technik eine äußere Pulverzufuhr mit einem Pulverförderer nicht gewährleisten, dass das Lot 7 bis zur Rissspitze gelangen kann.
Das Lot 7 kann in Form einer Paste, eines Schlickers, in reiner Pulverform oder mittels einer Folie aufgebracht und in die beschädigte Stelle 3 eingebracht werden.
Dabei ist es vorteilhaft, wenn die Materialzusammensetzung des Lotes 7 der des Bauteils 1 ähnlich ist.
Das Lot 7 muss jedoch zumindest einen Bestandteil umfassen, dessen Schmelztemperatur niedriger ist als die Schmelztemperatur des Basismaterials des Bauteils 1, damit mittels der Wärmeeinwirkung ein Aufschmelzen des Lotes 7, nicht jedoch des Basismaterials des Bauteils 1 erfolgt.
Die Schmelztemperatur des Lots 7 liegt vorzugsweise um mindestens 30°C oder mindestens 50°C niedriger als die Schmelztemperatur des Basismaterials des Bauteils 1, so dass das Basismaterial nicht gefährdet ist. Insbesondere liegt der Unterschied in den Schmelztemperaturen zwischen 50°C und 70°C. Dies ist insbesondere dann wichtig, wenn es sich bei dem Basismaterial um Superlegierungen handelt. Bei Superlegierungen verdampft bei hohen Temperaturen nahe seiner Schmelztemperaturen Chrom, sodass die Schmelztemperatur des Lots 7 möglichst gering gehalten und damit der Unterschied möglichst groß gehalten werden soll.

Der Unterschied in der Schmelztemperatur von Lot 7 und Basismaterial beträgt insbesondere mindestens 70°C, vorzugsweise 70°C ± 4°C.
Das Lot 7 wird vorzugsweise erstmal so aufgeschmolzen, das es in die zu reparierende Stelle 3 hineinläuft.
Die dazu notwendige Temperatur kann höher oder niedriger sein als die Temperaturen zur Einstellung der gerichteten Mikrostruktur.

Bezüglich der zu verlötenden Superlegierung besteht keinerlei Einschränkung. Besonders vorteilhaft für die Anwendung des erfindungsgemäßen Lots 7 haben sich jedoch die Werkstoffe PWA 1483, PWA 1484 und RENE N5 herausgestellt. PWA 1483 hat einen Schmelzpunkt um 1341°C, wohingegen RENE N5 einen Schmelzpunkt in der Region um 1360 - 1370°C aufweist. Vorzugsweise weist daher das zu verwendende Lot 7 eine Schmelztemperatur von 1271°C auf.

Bei der Verwendung von hohen Temperaturen besteht außerdem das Problem der Rekristallation bei DS oder SX-Werkstoffen, sodass auch hier die Anforderung besteht, dass das Lot 7 in der Schmelztemperatur einen großen Unterschied zu der Schmelztemperatur des Basismaterials des Bauteils 1 aufweist.

Um die Wärmeeinwirkung auf das Lot 7 zu verwirklichen, ist im vorliegenden Ausführungsbeispiel vorzugsweise eine Elektronenstrahlkanone 9 vorhanden, welche das aufzuschmelzende Lot 7 bestrahlt und ihm so die zum Schmelzen nötige Wärme zuführt.
Die Wärmeeinwirkung auf das Lot 7 kann auch mittels Laserstrahl erfolgen. Die Elektronenstrahlbehandlung erfolgt vorzugsweise im Vakuum. Insbesondere bei oxidationsempfindlichen Materialien, wie z. B. bei Superlegierungen, spielt die Oxidation eine wichtige Rolle, sodass eine Wärmebehandlung mittels eines Lasers oder eines Elektronenstrahls sowieso im Vakuum durchgeführt werden sollte. Die Elektronenstrahlbehandlung hat den Vorteil, dass sie zu einer besseren Energieeinkopplung in das Material führt und dass sich die Elektronenstrahlen berührungslos durch Spulen, die in dem Fall die Optik darstellen, über die zu reparierende Stelle 3 bewegen lassen.

Während des Lötvorgangs wird gezielt in Vorzugsrichtung der Mikrostruktur des Basismaterials ein Temperaturgradient im Bereich der Beschädigung 3 hergestellt. Das Herstellen des Temperaturgradienten kann dabei erfolgen, indem das Bauteil 1 und die Elektronenstrahlkanone 9 relativ zueinander bewegt werden. Im Ausführungsbeispiel wird daher die Elektronenstrahlkanone 9 parallel zur Oberfläche 5 über das Lot 7 geführt. Die Geschwindigkeit, mit der das Führen der Elektronenstrahlkanone 9 über das Lot 7 erfolgt, ist dabei derart gewählt, dass sich der gewünschte Temperaturgradient im Bereich der Beschädigung 3, d.h. im Lot 7, einstellt. Der Temperaturgradient induziert dabei das Entstehen einer epitaktisch gerichteten Mikrostruktur, wenn das durch die Elektronenstrahlkanone 9 aufgeschmolzene Lot 7 wieder erstarrt. Die Steilheit des Temperaturgradienten kann dabei beispielsweise durch die Geschwindigkeit, mit der Elektronenstrahlkanone 9 und Bauteil 1 relativ zueinander bewegt werden, oder die Laserleistung eingestellt werden. Unter der Steilheit des Gradienten ist hierbei die Zu- oder Abnahme der Temperatur pro Längeneinheit zu verstehen. Die Steilheit des Temperaturgradienten, die zum Entstehen einer gerichteten Mikrostruktur im sich verfestigenden Lot führt, hängt dabei von der Zusammensetzung des Lotes 7 ab.

Im vorliegenden Anwendungsbeispiel erstreckt sich die Vorzugsrichtung der gerichteten Mikrostruktur im Basismaterial des Bauteils 1 innerhalb der Zeichenebene von links nach rechts. Um im erstarrenden Lot 7 das Entstehen einer gerichteten Mikrostruktur zu induzieren, deren Vorzugsrichtung mit der im Basismaterial übereinstimmt, erfolgt die Bewegung der Elektronenstrahlkanone 9 relativ zum Bauteil 1 parallel zur Vorzugsrichtung der gerichteten Mikrostruktur des Basismaterials.

Figur 5 zeigt das Bauteil 1 nach dem Reparieren der Beschädigung 3. Wie durch die diagonal verlaufenden Striche im Bereich des nun verfestigten Lots 7 angedeutet ist, weist das verfestigte Lot 7, also das Reparaturmaterial, eine gerichtete Mikrostruktur auf, welche dieselbe Vorzugsrichtung wie die gerichtete Mikrostruktur des Basismaterials des Bauteils 1 besitzt.

Es ist aber auch möglich das Lot 7 ungerichtet erstarren zu lassen. Die kann für ein SX-, DS- oder CC Bauteill erfolgen.

Der Elektronenstrahl kann auch so aufgeweitet sein, dass er beispielsweise das gesamte Lot 7 bestrahlt und jedenfalls dadurch ganz erwärmt.
Ein Verfahren der Elektronenstrahlkanone ist also nicht unbedingt notwendig.
Durch die Abfuhr von Wärme des Lots 7 in das Substrat des Bauteils 1 entsteht innerhalb des Lots 7 ein Temperaturgradient. An der äußeren Oberfläche des Lots 7 ist die Temperatur am höchsten und an der Grenzfläche des Lots 7 zu dem Substrat des Bauteils 1 hin ist es kälter. Ggf. kann das Bauteil 1 auf der Rückseite, der Beschädigung 3 gegenüber oder irgendwo sonst gekühlt oder erwärmt werden, um einen gewünschten bestimmten Temperaturgradienten in Abhängigkeit von der Geometrie des Bauteils 1 und der Beschädigung 3 einzustellen.

Im vorliegenden Ausführungsbeispiel wurde zum Zuführen der Wärme eine Elektronenstrahlkanone 9 verwendet.
Alternativ ist jedoch auch die Verwendung anderer optischer Heizmethoden, beispielsweise das Beleuchten mit einer konventionellen Beleuchtungsvorrichtung, möglich. Außerdem ist es auch möglich, statt optischer Heizmethoden induktive Heizmethoden zu verwenden, in denen das Lot mittels Heizspulen geheizt wird. Schließlich besteht auch die Möglichkeit, spezielle Heizöfen, wie etwa eine sog. "Hot Box" oder einen Gießofen zum Herstellen eines Gussteils mit direktional gerichteter Mikrostruktur zu verwenden. Auf jeden Fall muss das verwendete Verfahren geeignet sein, einen Temperaturgradienten in der für die Erstarrung gewünschten Richtung im Bereich der Beschädigung bzw. der mit Lot verfüllten Beschädigung zu erzeugen. Bei Verwendung eines Ofens kann dies beispielsweise durch einen stationären Ofen erfolgen, der es ermöglicht, die Heizwirkung in verschiedenen Bereichen des Ofens getrennt einzustellen.

Ebenso kann eine Folie oder eine Paste, mittels der das Lot 7 aufgetragen wird, teilweise ein Pulver aus Nanopulver aufweisen.
Der Vorteil gegenüber dem Stand der Technik besteht darin, dass hier das Pulver nicht über einen Pulverförderer zugeführt wird, sondern bereits verdichtet der zu reparierenden Stelle 3 zugeführt wird. Ein Nanopulver über eine Düse einer zu reparierenden Stelle 3 zuzuführen, wie es aus dem Stand der Technik bekannt ist, ist fast unmöglich, da die Körner des Nanopulvers viel zu klein sind und beim Sprühen sehr breit streuen würden.

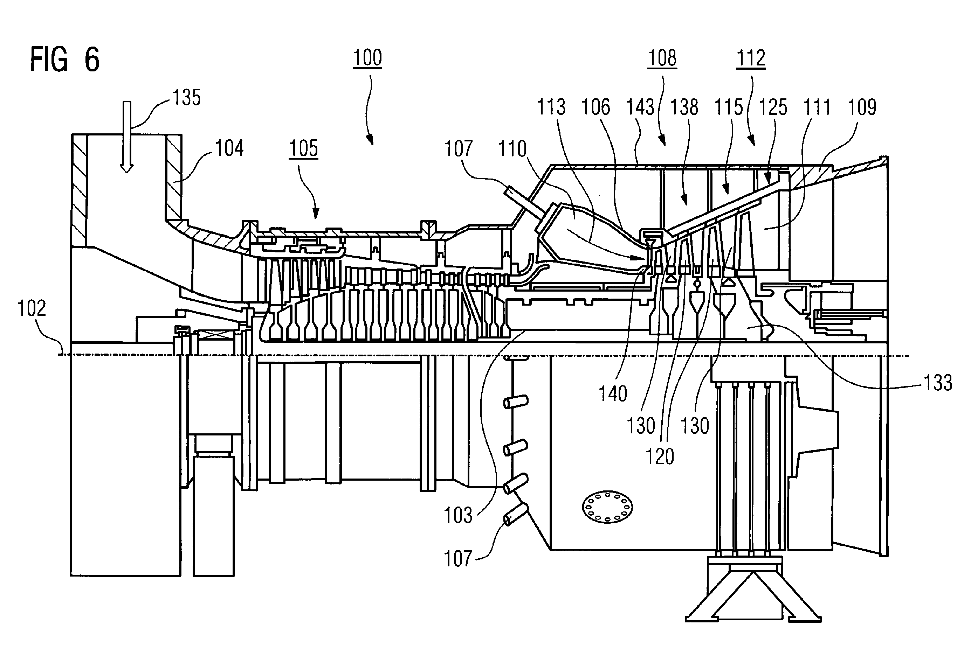

Die Figur 6 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 7 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrA1X; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Auf der MCrA1X kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 8 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAIX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Bauteil (1, 120, 130, 155),
das insbesondere nickelbasiert ist,
aufweisend ein Lot (7) nach einem oder mehreren der Ansprüche 8 bis 20.

2. Bauteil nach Anspruch 1,
bei dem nur der zweite Bestandteil (25) des Lots (7) dem Basismaterial des Bauteils (1, 120, 130, 155) entspricht oder ähnelt.

3. Bauteil nach Anspruch 2,
bei dem nur der zweite Bestandteil (25) des Lots (7) dem Basismaterial des Bauteils (1, 120, 130, 155) entspricht.

4. Bauteil nach Anspruch 1, 2 oder 3,
bei dem die Schmelztemperatur des ersten Bestandteils (22) niedriger ist als die Schmelztemperatur des Basismaterials des Bauteils (1, 120, 130, 155).

5. Bauteil nach Anspruch 1, 2, 3 oder 4,
bei dem die Schmelztemperatur des zweiten Bestandteils (25) des Lots (7) unter dem Schmelzpunkt des Basismaterials des Bauteils (1, 120, 130, 155) liegt.

6. Bauteil nach Anspruch 1, 2, 3, 4 oder 5,
bei dem die Schmelztemperatur des zweiten Bestandteils (25) des Lots (7) zwischen der Schmelztemperatur des Basismaterials des Bauteils (120, 130, 155) und der Schmelztemperatur des ersten Bestandteils (22) des Lots (7) liegt.

7. Bauteil nach Anspruch 1, 2, 3, 4 oder 5,
bei dem die Schmelztemperatur des ersten Bestandteils (22) des Lots (7) zwischen der Schmelztemperatur des Basismaterials des Bauteils (1, 120, 130, 155) und der Schmelztemperatur des zweiten Bestandteils (25) des Lots (7) liegt.

8. Lot,
aufweisend
einen metallischen ersten Pulverbestandteil (22) und
einen metallischen zweiten Pulverbestandteil (25),
**dadurch gekennzeichnet,**
**dass** der erste Bestandteil (22) ein Pulver mit Korngrößen im Mikrometerbereich (0.7µm - 100µm) darstellt und
**dass** der zweite Bestandteil (25) ein Pulver mit Korngrößen im Nanometerbereich (≤ 500nm) darstellt.

9. Lot nach Anspruch 8,
**dadurch gekennzeichnet, dass**
das Material des ersten Bestandteils (22) von dem Material des zweiten Bestandteils (25) verschieden ist.

10. Lot nach Anspruch 8 oder 9,
**dadurch gekennzeichnet, dass**
die Schmelztemperatur des ersten Bestandteils (22) niedriger ist als die des zweiten Bestandteils (25).

11. Lot nach Anspruch 8 oder 9,
**dadurch gekennzeichnet, dass**
die Schmelztemperatur des ersten Bestandteils (22) höher ist als die des zweiten Bestandteils (25).

12. Lot nach Anspruch 8, 9, 10 oder 11,
**dadurch gekennzeichnet, dass**
der erste Bestandteil (22) eine Legierung ist.

13. Lot nach Anspruch 8, 9, 10, 11 oder 12,
**dadurch gekennzeichnet, dass**
der zweite Bestandteil (25) eine Legierung ist.

14. Lot nach Anspruch 8, 9, 10, 11, 12 oder 13,
**dadurch gekennzeichnet, dass**
das erste Bestandteil (22) keinen Schmelzpunkterniedriger, insbesondere kein Bor, aufweist.

15. Lot nach Anspruch 8, 9, 10, 11, 12, 13 oder 14,
**dadurch gekennzeichnet, dass**
das zweite Bestandteil (25) keinen Schmelzpunkterniedriger, insbesondere kein Bor, aufweist.

16. Lot nach Anspruch 8, 9, 10, 11, 12, 13 oder 15,
**dadurch gekennzeichnet, dass**
der erste Bestandteil (22) zumindest einen, insbesondere nur einen Schmelzpunkterniedriger, aufweist,
insbesondere Kohlenstoff (C), Bor (B), Hafnium (Hf), Silizium (Si) oder Zirkon (Zr).

17. Lot nach einem oder mehreren der Ansprüche 8 bis 16,
**dadurch gekennzeichnet, dass**
der Volumenanteil des ersten Bestandteils (22) im Lot (7) am größten ist.

18. Lot nach Anspruch 12,
**dadurch gekennzeichnet, dass**
der erste Bestandteil (22) nickelbasiert ist.

19. Lot nach Anspruch 13,
**dadurch gekennzeichnet, dass**
der zweite Bestandteil (25) nickelbasiert ist.

20. Lot nach Anspruch 8 bis 13 oder 15 bis 18,
**dadurch gekennzeichnet, dass**
der erste Bestandteil (22) zumindest einen, insbesondere nur einen Schmelzpunkterniedriger, aufweist,
insbesondere Tantal (Ta) oder Titan (Ti).
